# EUROPEAN PATENT SPECIFICATION

(11) **EP 1 872 460 B1**
(45) Date of publication and mention of the grant of the patent: **02.02.2011**
(21) Application number: 06727434.0
(22) Date of filing: 07.04.2006
(51) Int. Cl.: H02J 9/06

(54) **UNINTERRUPTIBLE POWER SUPPLY WITH ADDITIONAL FEEDING**
UNTERBRECHUNGSFREIES STROMVERSORGUNGSSYSTEM MIT ZUSÄTZLICHER VERSORGUNG
ALIMENTATION SANS COUPURE DISPOSANT D'UNE ALIMENTATION SUPPLEMENTAIRE

(30) Priority: 08.04.2005 IT MO20050082
(43) Date of publication of application: 02.01.2008
(73) Proprietor: Meta System S.p.A., 42124 Reggio Emilia (IT)
(72) Inventor: SIMONAZZI, Giuseppe, 42100 Reggio Emilia (IT)
(74) Representative: Brunacci, Marco
(86) International application number: PCT/IB2006/000804
(87) International publication number: WO 2006/106418

(56) References cited:
- WO-A-97/48166
- GB-A- 2 318 000
- US-A1- 2002 149 206
- US-A1- 2002 153 779
- US-B1- 6 184 593
- US-B1- 6 304 006

## Description

### Technical field

The present invention concerns an Uninterruptible Power Supply with additional feeding; more specifically, the invention concerns a UPS unit that can be powered from the power mains, by battery or by means of an auxiliary power supply.

### Background Art

As is known, UPS units are normally used to offset power breaks due for instance to sudden blackouts or temporary network faults.

UPS units are especially important in those situations in which the permanent power supply to appliances and devices is of vital importance such as, for instance in hospitals, banks and similar.

Currently known UPS units are connected directly to the mains supply and foresee the presence of batteries that intervene to supply downstream loads in the event of the mains supply being interrupted.

Normally, the UPS units make a double conversion from alternate current to direct current and from direct current to equivalent alternate current to supply the downstream load. These conversions produce a drop in efficiency.

From document US 2002/153779 A1 it is known a UPS comprising a plurality of slots which can house either power modules or battery packs, wherein each power module has, at its input, an input controlled rectifier that is provided for selectively receiving AC power from the mains, or DC power from a battery, depending on the operating mode of the SUPS, and is configured in such a way to allow the starting of the UPS even with depleted batteries or no batteries installed.

However even this known UPS appears to request further improvements especially in the direction of a higher efficiency and of the saving, during normal operation, of the energy supplied by the mains or the battery means.

### Disclosure of the Invention

The primary aim of the present invention is to make a UPS unit powered from both the mains, with a back-up battery, and from an auxiliary supply source.

As part of this aim, a purpose of the present invention is to make a UPS unit in which the auxiliary supply source is able to integrate both the mains voltage, when this is present, and the battery voltage, when the battery of the UPS unit powers the load connected to the mains.

Another aim of this invention is to make a UPS unit that permits achieving energy saving during operation compared to UPS units of known type.

Not the last aim of this invention is to make a UPS unit that is both highly reliable, easy to make and with a competitive cost.

This aim, as well as these and other purposes better explained below, are achieved by a UPS unit and a method for controlling a UPS unit having all the features defined by the main independent claims 1 and 5.

### Brief Description of the Drawings

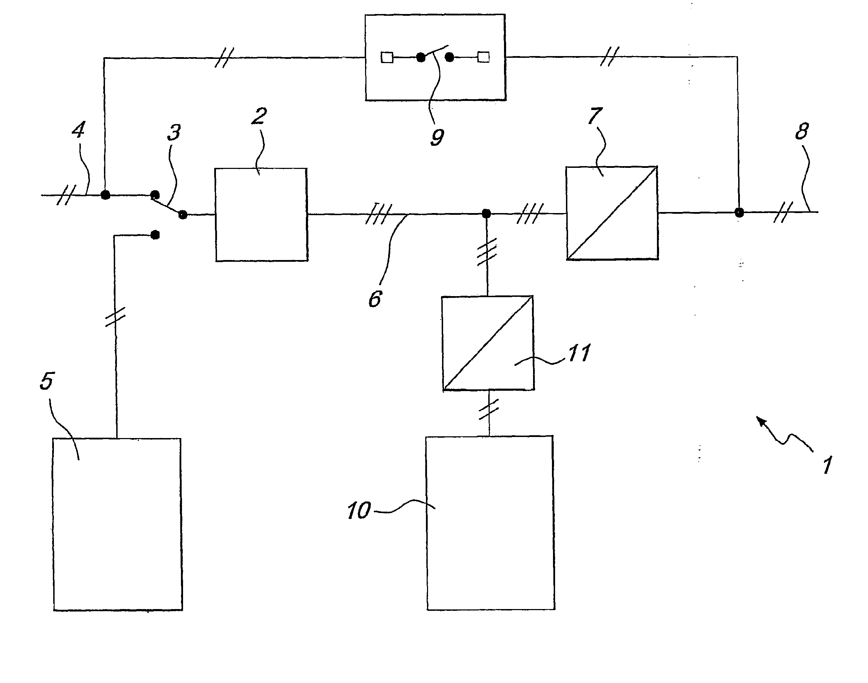

Further characteristics and advantages of the invention will appear even more evident from the description of a preferred, but not exclusive, embodiment of the UPS unit according to the invention, illustrated by way of non limiting example in the accompanying drawing, wherein the only figure shows a block diagram of the UPS unit according to the present invention.

### Ways of carrying out the invention

With reference to the figure, the UPS unit according to the present invention, generally designated by reference numeral 1, comprises the power step-up means 2 also able to carry out a power factor correction, which are connected, by the switching means 3, to the power mains 4, or to a battery 5 which takes the place of the stage in which the mains 4 is deficient.

When the switching means 3 close the connection on the power mains 4, the power step-up means 2 operate as a power factor correction device, while when the switching means 3 close on the battery 5, the power step-up means 2 operate as power step-up and carry out a double conversion from alternate current to direct current and from direct current to direct current.

The output of the power step-up means 2 is a double bus 6 with high voltage, uninterruptible, which powers the inverter means 7 which produce a conversion from direct current to alternate current and output the alternate voltage onto line 8. A bypass circuit is envisaged to bypass the electronics of the UPS unit, by connecting the mains directly to the output, for safety reasons, for instance in the case of an overload, so as to be able to preserve the electronics of the UPS unit, or due to bad operation of the UPS unit itself.

The bypass circuit, indicated by reference numeral 9, comprises bypass switch means, able to allow direct connection between the power mains 4 and the output 8, or, in the case of the means 9 being open, to allow normal connection between the mains and the output by means of the electronics of the UPS unit.

The peculiar features of the invention lie in the fact that at least one solar panel 10 is envisaged, able to release energy for powering a load directly or for assisting the power voltage produced either by the power mains 4, or the battery 5 in the case of the mains supply being disconnected.

The solar panel 10 is therefore connected to the power step-up means 11 which are set with a first power threshold higher than a second power threshold set in the power step-up means 2. The output of the power step-up means 11 is also inputted to the inverter means 7.

In the event of the power from the solar panel 10 being such as to reach the first preset threshold, power is supplied to the loads connected to the mains by means of the UPS unit using the energy from the solar panel 10.

In the case of the solar panel no longer being able to provide a power supply equal to the first pre-set threshold, the mains integrates the missing power, if the mains is connected, or else this job is done by the battery 5.

Basically, the UPS unit according to the invention provides for the operation of the load connected to the mains, by means of the UPS unit, using not the mains power, but first of all, with priority, the power generated by the solar panel 10, and only subsequently, meaning if this power voltage is insufficient, by the mains power, if this is present, or power from the battery 5 if the UPS unit is operating with the mains disconnected.

In practice, it has been found that the UPS unit according to the present invention fully achieves the preset aim and purposes, as it permits achieving an energy saving using the UPS unit itself, by virtue of the power supply provided by at least one solar panel, so as to be able to power the downstream loads, or else the solar panel energy can be integrated by the mains power when this is present, or by the battery power.

The UPS unit thus conceived is susceptible of numerous modifications and variations, all of which falling within the scope of the inventive concept; furthermore all the details can be replaced with other elements that are technically equivalent.

## Claims

1. UPS unit (1) comprising :
- power step-up means (2) connected to the power mains (4),
- battery supply means (5),
- switching means (3) for switching the connection of said power step-up means (2) from the power mains (4) to said battery supply means (5), when the power mains (4) is deficient,
- conversion means (7) able to be powered by said power step-up means (2) for producing an AC output voltage,
- at least one additional power supply source (10), and
- additional power step-up means (11) having the input connected to said additional power supply source (10) and having the output connected to said conversion means (7),
wherein the additional power step-up means (11) connected to said additional power supply source (10) are pre-set with a first power threshold higher than a second power threshold pre-set in the power set-up means (2) connected to the power mains (4),
whereby said additional power supply source (10) is able to power, with priority, the downstream loads of said UPS unit (1), when said first power threshold pre-set in said additional power step-up means (11) of said additional power supply source (10) is reached, and
only subsequently said additional power supply source (10), when it is no longer able to provide a power equal to said first pre-set power threshold, is able to be integrated by said power mains (4), if connected, or by said battery supply means (5), if the power mains (4) is disconnected from the UPS unit (1).

2. UPS unit (1) according to claim 1, **characterized in that** said additional power supply source (10) comprises at least one solar panel.

3. UPS unit according to claim 1, **characterized in that** it comprises a bypass circuit able to directly connect said power mains (4) to the output of said conversion means (7).

4. UPS unit according to claim 1, **characterized in that** said power step-up means /2) connected to said power mains (4) are able to carry out a power factor correction of said power mains (4).

5. Method for the control of the power supplied by a UPS unit (1) having:
- power step-up means (2) connected to the power mains (4),
- battery supply means (5),
- switching means (3) for switching the connection of said power step-up means (2) from the power mains (4) to said battery supply means (5), when the power mains (4) is deficient,
- conversion means (7) able to be powered by said power step-up means (2) for producing an AC output voltage,
- at least one additional power supply source (10), and
- additional power step-up means (11) having the input connected to said additional power supply source (10) and having the output connected to said conversion means (7),
the method comprising the following steps:
- pre-setting the additional power step-up means (11) connected to said additional power supply source (10) with a first power threshold higher than a second power threshold pre-set in the power set-up means (2) connected to the power mains (4);
- powering, with priority, the downstream loads of said UPS unit (1) by means of said additional power supply source (10), when said first power threshold pre-set in said additional power step-up means (11) of said additional power supply source (10) is reached; and
- integrating, in order to power the downstream loads of said UPS unit (1), said additional power supply source (10), when it is no longer able to provide a power equal to said first pre-set power threshold, with said power mains (4), if connected, or with said battery supply means (5), of the power mains (4) is disconnected from the UPS unit (1).

6. Method according to claim 1, wherein said additional power supply source (10) comprises at least one solar panel.

## Patentansprüche

1. UPS-Einheit (1), die umfasst:
- Leistungshochsetzungsmittel (2), die mit dem Stromversorgungsnetz (4) verbunden sind,
- Batterieversorgungsmittel (5),
- Schaltmittel (3), um die Verbindung der Leistungshochsetzungsmittel (2) von dem Stromversorgungsnetz (4) zu den Batterieversorgungsmitteln (5) umzuschalten, wenn das Stromversorgungsnetz (4) fehlerhaft ist,
- Umwandlungsmittel (7), die durch die Leistungshochsetzungsmittel (2) mit Leistung versorgt werden können, um eine Ausgangswechselspannung zu erzeugen,
- wenigstens eine zusätzliche Stromversorgungsquelle (10) und
- zusätzliche Leistungshochsetzungsmittel (11), deren Eingang mit der zusätzlichen Stromversorgungsquelle (10) verbunden ist und deren Ausgang mit den Umwandlungsmitteln (7) verbunden ist,
wobei für die zusätzlichen
Leistungshochsetzungsmittel (11), die mit der zusätzlichen Stromversorgungsquelle (10) verbunden sind, im Voraus eine erste Leistungsschwelle festgesetzt ist, die höher ist als eine zweite Leistungsschwelle, die im Voraus in den mit dem Stromversorgungsnetz (4) verbundenen Leistungshochsetzungsmittel (2) festgesetzt ist,
wobei die zusätzliche Stromversorgungsquelle (10) die stromabseitigen Lasten der UPS-Einheit (1) vorrangig mit Strom versorgen kann, wenn die erste Leistungsschwelle, die für die zusätzlichen Leistungshochsetzungsmittel (11) der zusätzlichen Stromversorgungsquelle (10) im Voraus festgesetzt ist, erreicht ist, und
wobei nur anschließend daran, wenn die zusätzliche Stromversorgungsquelle nicht mehr länger eine Leistung bereitstellen kann, die gleich der ersten im Voraus gesetzten Leistungsschwelle ist, diese zusätzliche Stromversorgungsquelle in das Stromversorgungsnetz (4), falls abgeschlossen, oder in die Batterieversorgungsmittel (5), falls das Stromversorgungsnetz (4) von der UPS-Einheit (1) getrennt ist, eingegliedert werden kann.

2. UPS-Einheit (1) nach Anspruch 1, **dadurch gekennzeichnet, dass** die zusätzliche Stromversorgungsquelle (10) wenigstens eine Solarzellentafel enthält.

3. UPS-Einheit nach Anspruch 1, **dadurch gekennzeichnet, dass** sie eine Umgehungsschaltung aufweist, die das Stromversorgungsnetz (4) direkt mi dem Ausgang der Umwandlungsmittel (7) verbinden kann.

4. UPS-Einheit nach Anspruch 1, **dadurch gekennzeichnet, dass** die Leistungshochsetzungsmittel (2), die mit dem Stromversorgungsnetz (4) verbunden sind, eine Leistungsfaktorkorrektur des Stromversorgungsnetzes (4) ausführen können.

5. Verfahren für die Steuerung der von einer UPS-Einheit (1) gelieferten Leistung, die enthält:
- Leistungshochsetzungsmittel (2), die mit dem Stromversorgungsnetz (4) verbunden sind,
- Batterieversorgungsmittel (5),
- Schaltmittel (3), um die Verbindung der Leistungshochsetzungsmittel (2) von dem Stromversorgungsnetz (4) zu den Batterieversorgungsmitteln (5) zu schalten, wenn das Stromversorgungsnetz (4) fehlerhaft ist,
- Umwandlungsmittel (7), die durch die Leistungshochsetzungsmittel (2) mit Leistung versorgt werden können, um eine Ausgangswechselspannung zu erzeugen,
- wenigstens eine zusätzliche Stromversorgungsquelle (10) und
- zusätzliche Leistungshochsetzungsmittel (11), deren Eingang mit der zusätzlichen Stromversorgungsquelle (10) verbunden ist und deren Ausgang mit den Umwandlungsmitteln (7) verbunden ist,
wobei das Verfahren die folgenden Schritte umfasst:
- für die zusätzlichen Leistungshochsetzungsmittel (11), die mit der zusätzlichen Stromversorgungsquelle (10) verbunden sind, im Voraus Festsetzen einer ersten Leistungsschwelle, die höher als eine zweite Leistungsschwelle ist, die im Voraus für die Leistungshochsetzungsmittel (2), die mit dem Stromversorgungsnetz (4) verbunden sind, festgesetzt worden ist;
- Versorgen der stromabseitigen Lasten der UPS-Einheit (1) vorrangig mit Leistung durch die zusätzliche Stromversorgungsquelle (10), wenn die erste Leistungsschwelle, die in den zusätzlichen Leistungshochsetzungsmitteln (11) der zusätzlichen Stromversorgungsquelle (10) im Voraus festgesetzt ist, erreicht ist; und
- Eingliedern der zusätzlichen Stromversorgungsquelle (10), wenn sie nicht länger eine Leistung bereitstellen kann, die gleich der ersten im Voraus festgesetzten Leistungsschwelle ist, in das Stromversorgungsnetz (4), falls angeschlossen, oder in die Batterieversorgungsmittel (5), falls das Stromversorgungsnetz (4) von der UPS-Einheit (1) getrennt ist, um die stromabseitigen Lasten der UPS-Einheit (1) mit Leistung zu versorgen.

6. Verfahren nach Anspruch 1, wobei die zusätzliche Stromversorgungsquelle (10) wenigstens eine Solarzellentafel enthält.

## Revendications

1. Unité UPS (système d'alimentation sans coupure) comprenant :
- des moyens (2) élévateurs de puissance raccordés au réseau électrique (4),
- des moyens (5) d'alimentation par batterie (5),
- des moyens commutateurs (3) pour commuter la connexion desdits moyens (2) élévateurs de puissance du réseau électrique (4) auxdits moyens (5) d'alimentation par batterie lorsque le réseau électrique (4) est déficient,
- des moyens de conversion (7) aptes à être alimentés par lesdits moyens (2) élévateurs de puissance afin de produire une tension de sortie CA,
- au moins une source d'alimentation électrique supplémentaire (10), et
- des moyens (11) élévateurs de puissance supplémentaires dont l'entrée est raccordée à ladite source d'alimentation électrique supplémentaire (10) et dont la sortie est raccordée auxdits moyens de conversion (7),
dans laquelle les moyens (11) élévateurs de puissance supplémentaires raccordés à ladite source d'alimentation électrique supplémentaire (10) sont pré-réglés avec un premier seuil de puissance supérieur à un deuxième seuil de puissance pré-réglé dans les moyens (2) élévateurs de puissance raccordés au réseau électrique (4),
ladite source d'alimentation électrique supplémentaire (10) étant apte à alimenter, en priorité, les charges en aval de ladite unité UPS (1) lorsque ledit premier seuil de puissance préréglé dans lesdits moyens (11) élévateurs de puissance supplémentaires de ladite source d'alimentation électrique supplémentaire (10) est atteint, et
seulement ensuite, ladite source d'alimentation électrique supplémentaire (10), lorsqu'elle n'est plus capable de fournir une puissance égale audit premier seuil de puissance pré-réglé, est apte à être intégrée par ledit réseau électrique (4), s'il est raccordé, ou par lesdits moyens (5) d'alimentation par batterie, si le réseau électrique (4) est déconnecté de l'unité UPS (1).

2. Unité UPS (1) selon la revendication 1, ***caractérisée en ce que*** ladite source d'alimentation électrique supplémentaires (10) comprend au moins un panneau photovoltaïque.

3. Unité UPS (1) selon la revendication 1, ***caractérisée en ce* qu'**elle comprend un circuit de dérivation apte à relier directement ledit réseau électrique (4) à la sortie desdits moyens de conversion (7).

4. Unité UPS selon la revendication 1, ***caractérisée en ce que*** lesdits moyens (2) élévateurs de puissance raccordés audit réseau électrique (4) sont aptes à réaliser une correction du facteur de puissance dudit réseau électrique (4).

5. Procédé pour contrôler la puissance fournie à une unité UPS (1) possédant :
- des moyens (2) élévateurs de puissance raccordés au réseau électrique (4),
- des moyens (5) d'alimentation par batterie (5),
- des moyens commutateurs (3) pour commuter la connexion desdits moyens (2) élévateurs de puissance, du réseau électrique (4) auxdits moyens (5) d'alimentation par batterie lorsque le réseau électrique (4) est déficient,
- des moyens de conversion (7) aptes à être alimentés par lesdits moyens (2) élévateurs de puissance afin de produire une tension de sortie CA,
- au moins une source d'alimentation électrique supplémentaire (10), et
- des moyens (11) élévateurs de puissance supplémentaires dont l'entrée est raccordée à ladite source d'alimentation électrique supplémentaire (10) et dont la sortie est raccordée auxdits moyens de conversion (7),
le procédé comprenant les étapes suivantes :
préréglage des moyens (11) élévateurs de puissance supplémentaire raccordés à ladite source d'alimentation électrique supplémentaire (10) avec un premier seuil de puissance supérieur à un deuxième seuil de puissance pré-réglé dans les moyens (2) élévateurs de puissance raccordés au réseau électrique (4) ;
alimentation, en priorité, des charges aval de ladite unité UPS (1), au moyen de ladite source d'alimentation électrique supplémentaire (10) lorsque ledit premier seuil de puissance préréglé dans lesdits moyens (11) élévateurs de puissance supplémentaires de ladite source d'alimentation électrique supplémentaire (10) est atteins ; et
intégration, de manière à alimenter les charges aval de ladite unité UPS (1), de ladite source d'alimentation électrique supplémentaire (10), lorsqu'elle n'est plus capable de fournir une puissance égale audit premier seuil de puissance pré-réglé, audit réseau électrique (4), s'il est raccordé, ou auxdits moyens (5) d'alimentation par batterie, si le réseau électrique (4) est déconnecté de l'unité UPS (1).

6. Procédé selon la revendication 1, dans lequel ladite source d'alimentation électrique supplémentaire zip) comprend au moins un panneau photovoltaïque.
